# EUROPÄISCHE PATENTSCHRIFT

(11) **EP 4 115 723 B1**
(45) Veröffentlichungstag und Bekanntmachung des Hinweises auf die Patenterteilung: **15.10.2025**
(21) Anmeldenummer: 22167048.2
(22) Anmeldetag: 07.04.2022
(51) Int. Cl.: A01D 41/12

(54) **MÄHDRESCHER**
COMBINE HARVESTER
MOISSONNEUSE-BATTEUSE

(30) Priorität: 05.07.2021 DE 102021117214
(43) Veröffentlichungstag der Anmeldung: 11.01.2023
(73) Patentinhaber: CLAAS Selbstfahrende Erntemaschinen GmbH, 33428 Harsewinkel (DE)
(72) Erfinder: Heinze, Matthias, 33609 Bielefeld (DE); Beulke, Christian, 37589 Echte (DE)
(74) Vertreter: CLAAS Gruppe

(56) Entgegenhaltungen:
- EP-A1- 3 662 737
- EP-B1- 3 172 959
- US-A1- 2018 007 831
- US-B2- 10 405 493

## Beschreibung

### Mähdrescher

Die Erfindung betrifft einen Mähdrescher mit einem Radialverteiler, der ein Gehäuse und in dem Gehäuse zwei Wurfrotoren aufweist, wobei die Wurfrotoren jeweils zumindest zwei Paddel aufweisen und in einer Auswurfebene gegenläufig um zwei zu der Auswurfebene senkrechte Rotorachsen rotierbeweglich angeordnet sind, und wobei das Gehäuse einen Einlass für Stroh in einer Oberseite aufweist und die Paddel parallel zu der Auswurfebene und in einer Fahrtrichtung des Mähdreschers teilweise umschließt und entgegen der Fahrtrichtung zum Auswerfen des Strohs in der Auswurfebene offen ist.

Ein solcher Mähdrescher ist aus EP 2 347 645 A1 bekannt. An dem bekannten Mähdrescher weist ein seitlicher Spalt zwischen dem Gehäuse und einer der Rotorachse abgewandten Stirnseite der Paddel parallel zu der Auswurfebene verlaufende Ausbuchtungen auf, die ein Einklemmen des Strohs zwischen den Paddeln und dem Gehäuse vermeiden.

In dem bekannten Mähdrescher kann am Einlass in die Wurfrotoren Stroh in einem oberen Spalt zwischen der Oberseite und den Paddeln verklemmen. Aus US2018/007831 ist ein weiterer Mähdrescher bekannt.

### Aufgabe

Der Erfindung liegt die Aufgabe zugrunde, ein Verklemmen von Stroh am Einlass in die Wurfrotoren zu vermeiden.

### Lösung

Ausgehend von dem bekannten Mähdrescher wird erfindungsgemäß vorgeschlagen, dass ein oberer Spalt zwischen den Paddeln und der Oberseite mindestens abschnittsweise mindestens doppelt so groß ist wie ein unterer Spalt zwischen den Paddeln und einer Unterseite des Gehäuses. Mähdrescher sind Arbeitsmaschinen zum kontinuierlichen Mähen von Getreide von einem Feld, Dreschen des Getreides und Trennen von Körnern und Stroh. Der Radialverteiler dient zum Verteilen des Strohs auf dem Feld. Der deutlich vergrößerte obere Spalt vermeidet das Verklemmen von Stroh am Einlass in die Wurfrotoren.

Vorzugsweise erweitert sich an einem erfindungsgemäßen Mähdrescher der obere Spalt in radialer Richtung keilförmig. Weiter, weist an einem erfindungsgemäßen Mähdrescher der obere Spalt in einem der Rotorachse zugewandten Bereich eine konstante Breite auf. Der Bereich mit konstanter Breite und die daran anschließende Keilform tragen dem mit dem Abstand von der Rotorachse steigenden Risiko des Verklemmens Rechnung. Alternativ zu der Keilform kann der Spalt beispielsweise einen zweiten Bereich mit konstant erhöhter Breite oder eine Kombination beider Formvarianten aufweisen.

Vorzugsweise sind an einem erfindungsgemäßen Mähdrescher die Paddel aus Stahlguss gefertigt. Dieser Werkstoff ermöglicht es, die Paddel in allen Fruchtarten einzusetzen.

Vorzugsweise weist ein erfindungsgemäßer Mähdrescher einen Häcksler zum Häckseln des Strohs oberhalb des Radialverteilers auf und einen Auslass des gehäckselten Strohs aus dem Häcksler in den Einlass der Wurfrotoren. Das gehäckselte Stroh lässt sich besser in den Boden einarbeiten.

Vorzugsweise umfasst an einem erfindungsgemäßen Mähdrescher der obere Spalt, der untere Spalt und ein seitlicher Spalt zwischen den Paddeln und einer Leitfläche 15 bis 30 % eines Querschnitts des Gehäuses. Das Luftpolster, das durch die um die Verteilachse rotierenden Paddel in dem Radialverteiler entstehet, behindert dann das Einlassen des Strohs in den Radialverteiler am wenigsten.

Vorzugsweise weist an einem erfindungsgemäßen Mähdrescher das Gehäuse eine Zylinderform auf. Die Zylinderform ist technisch besonders einfach herzustellen.

Vorzugsweise weisen an einem erfindungsgemäßen Mähdrescher die Paddel an einer der Rotorachse abgewandten Stirnseite parallel zu der Auswurfebene verlaufende Ausbuchtungen auf. Die kammartige Form der Paddel vermeidet ein Einklemmen des Strohs in dem seitlichen Spalt zwischen der Stirnseite der Paddel und der Leitfläche des Gehäuses.

Vorzugsweise sind an einem erfindungsgemäßen Mähdrescher die Ausbuchtungen keilförmig ausgebildet. Die dann gleichfalls keilförmigen Spitzen an der Stirnseite des Paddels weisen so eine besonders hohe mechanische Stabilität auf.

### Ausführungsbeispiel

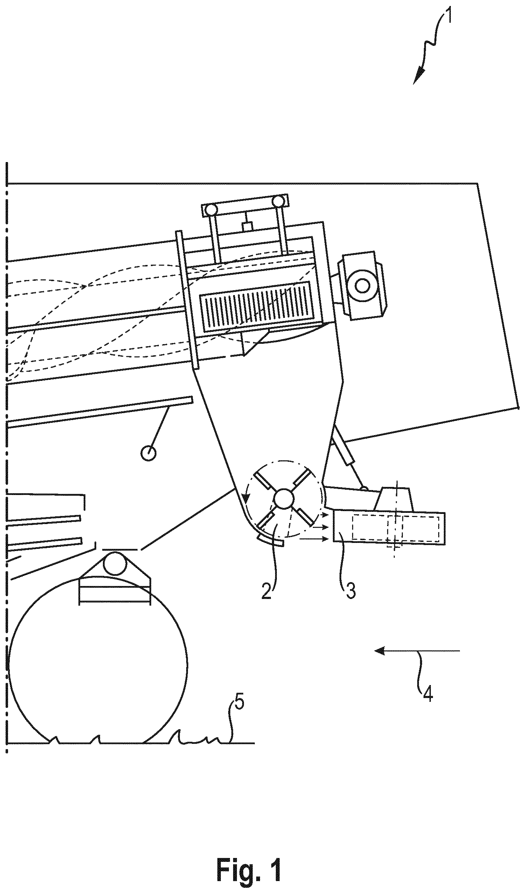

Die Erfindung wird nachfolgend anhand eines Ausführungsbeispiels erläutert. Gezeigt sind schematisch
- in Figur 1: ein Heck eines erfindungsgemäßen Mähdreschers,

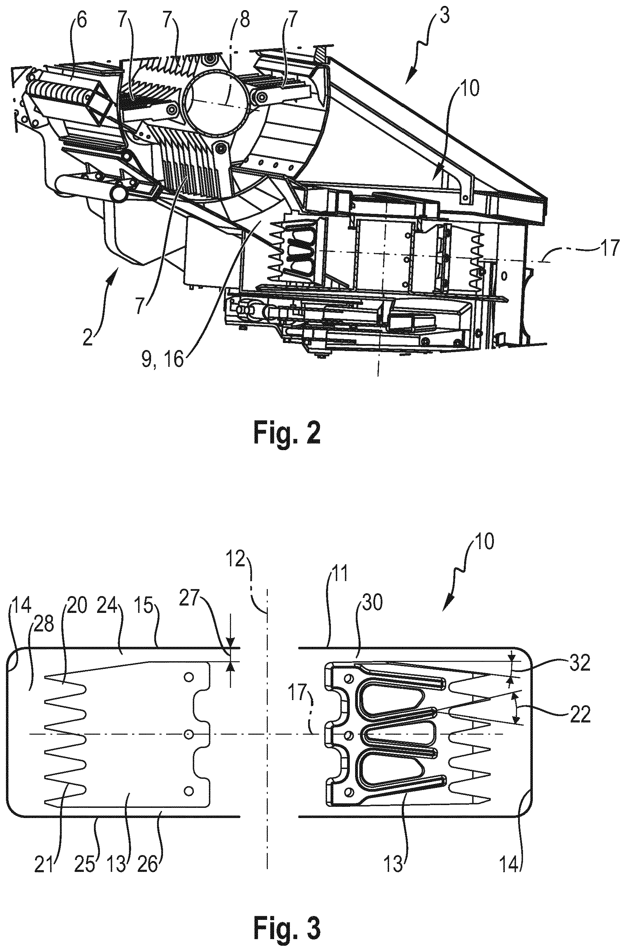

- in Figur 2: einen Radialverteiler in dem Heck und
- in Figur 3: einen Wurfrotor des Radialverteilers.

Ein darüber hinaus nicht weiter dargestellter erfindungsgemäßer Mähdrescher weist im Heck 1 einen Häcksler 2 und einen Radialverteiler 3 auf. Der Mähdrescher fährt in einer Fahrtrichtung 4 über ein Feld 5, mäht Getreide von dem Feld 5, drischt es und trennt so die Körner von Stroh und Spreu. Das Getreide, Körner, Stroh und Spreu sind nicht dargestellt.

Der Häcksler 2 weist in einem zylindrischen Gehäuse 6 vier Messerreihen 7 auf, die um eine quer zu der Fahrtrichtung 4 waagrecht verlaufende Achse 8 rotierbar sind und dabei das Stroh zerkleinern und durch einen Auslass 9 aus dem Gehäuse 6 und in den Radialverteiler 3 fördern.

Der Radialverteiler 3 weist nebeneinander zwei Wurfrotoren 10 mit jeweils einem Gehäuse 11 und in dem Gehäuse 11 sechs gegenläufig um zwei quer zu der Achse 8 des Häckslers 2 verlaufende Rotorachsen 12 rotierbare Paddel 13 auf. Das Gehäuse 11 umschließt zylinderförmig in der Fahrtrichtung 4 jeweils die rotierenden Paddel 13 des Wurfrotors 10, weist eine parallel zu der Rotorachse 12 verlaufende Leitfläche 14 und an seiner Oberseite 15 einen zu dem Häcklser offenen Einlass 16 auf und ist entgegen der Fahrtrichtung 4 in einer quer zur Rotorachse 12 liegenden Auswurfebene 17 offen.

Die Paddel 13 sind aus Stahlguss als Platten gefertigt und zu der Rotorachse 12 an einem nicht dargestellten Rotorkern angebracht. Zu der Leitfläche 14 sind die Paddel 13 kammartig mit je sechs keilförmigen Zinken 20 gestaltet, Ausbuchtungen 21 des Spalts zwischen den Zinken 20 weisen einen Öffnungswinkel 22 von 24° auf.

Zu der Oberseite 15 des Gehäuses 11 weisen die Paddel 13 einen oberen Spalt 24, zu einer Unterseite 25 einen unteren Spalt 26 mit einer Breite 27 und zu der Leitfläche 14 einen seitlichen Spalt 28 auf. Der obere Spalt 24 ist anschließend an einen der Rotorachse 12 zugewandten Bereich 30 keilförmig mit einem Keilwinkel 31 von 8° erweitert. Der obere Spalt 24, der untere Spalt 26 und der seitliche Spalt 28 umfassen zusammen 15 %, die Paddel 13 85 % der Querschnittsfläche des Gehäuses 11.

Der Radialverteile ist um die Häckslerachse schwenkbar: In einer Position "Straßenfahrt" ist die Auswurfebene 17 schräg nach oben, in einer Position "Schwadablage" stark und in einer "Häckselposition" schwächer schräg nach unten geneigt. Die Positionen "Straßenfahrt" und "Schwadablage" sind nicht dargestellt.

Im Häckslerbetrieb wird der Gutstrom aus gehäckseltem Stroh und Spreu aus dem Häcksler 2 direkt in den Einlass 16 des Radialverteilers 3 übergeben. Die beiden Wurfrotoren 10 übernehmen den Gutstrom aus gehäckseltem Stroh und Spreu und verteilen ihn über die Arbeitsbreite des Mähdreschers.

### Bezugszeichenliste

- 1: Heck
- 2: Häcksler
- 3: Radialverteiler
- 4: Fahrtrichtung
- 5: Feld
- 6: Gehäuse des Häckslers
- 7: Messerreihe
- 8: Achse
- 9: Auslass
- 10: Wurfrotor
- 11: Gehäuse
- 12: Rotorachse
- 13: Paddel
- 14: Leitfläche
- 15: Oberseite
- 16: Einlass
- 17: Auswurfebene
- 20: Zinken
- 21: Ausbuchtung
- 22: Öffnungswinkel
- 24: oberer Spalt
- 25: Unterseite
- 26: unterer Spalt
- 27: Breite
- 28: seitlicher Spalt
- 30: Bereich
- 31: Keilwinkel

## Patentansprüche

1. Mähdrescher mit einem Radialverteiler (3), der ein Gehäuse (11) und in dem Gehäuse (11) zwei Wurfrotoren (10) aufweist, wobei die Wurfrotoren (10) jeweils zumindest zwei Paddel (13) aufweisen und in einer Auswurfebene (17) gegenläufig um zwei zu der Auswurfebene (17) senkrechte Rotorachsen (12) rotierbeweglich angeordnet sind, und wobei das Gehäuse (11) einen Einlass (16) für Stroh in einer Oberseite (15) aufweist und die Paddel (13) parallel zu der Auswurfebene (17) und in einer Fahrtrichtung (4) des Mähdreschers teilweise umschließt und entgegen der Fahrtrichtung (4) zum Auswerfen des Strohs in der Auswurfebene (17) offen ist,
**dadurch gekennzeichnet, dass**
ein oberer Spalt (24) zwischen den Paddeln (13) und der Oberseite (15) mindestens abschnittsweise mindestens doppelt so groß ist wie ein unterer Spalt (26) zwischen den Paddeln (13) und einer Unterseite (25) des Gehäuses (11), wobei der obere Spalt (24) in einem der Rotorachse (12) zugewandten Bereich (30) eine konstante Breite (27) aufweist.

2. Mähdrescher nach dem vorgenannten Anspruch, **dadurch gekennzeichnet, dass** der obere Spalt (24) sich in radialer Richtung keilförmig erweitert.

3. Mähdrescher nach einem der vorgenannten Ansprüche, **dadurch gekennzeichnet, dass** die Paddel (13) aus Stahlguss gefertigt sind.

4. Mähdrescher nach einem der vorgenannten Ansprüche, **gekennzeichnet durch** einen Häcksler (2) zum Häckseln des Strohs oberhalb des Radialverteilers (3) und einen Auslass (9) des gehäckselten Strohs aus dem Häcksler (2) in den Einlass (16) der Wurfrotoren (10).

5. Mähdrescher nach einem der vorgenannten Ansprüche, **dadurch gekennzeichnet, dass** der obere Spalt (24), der untere Spalt (26) und ein seitlicher Spalt (28) zwischen den Paddeln (13) und einer Leitfläche (14) zusammen 15 bis 30 % eines Querschnitts des Gehäuses (11) umfassen.

6. Mähdrescher nach einem der vorgenannten Ansprüche, **dadurch gekennzeichnet, dass** das Gehäuse (11) eine Zylinderform aufweist.

7. Mähdrescher nach einem der vorgenannten Ansprüche, **dadurch gekennzeichnet, dass** die Paddel (13) an einer der Rotorachse (12) abgewandten Stirnseite parallel zu der Auswurfebene (17) verlaufende Ausbuchtungen (21) aufweisen.

8. Mähdrescher nach dem vorgenannten Anspruch, **dadurch gekennzeichnet, dass** die Ausbuchtungen (21) keilförmig ausgebildet sind.

## Claims

1. A combine harvester with a radial distributor (3) which has a housing (11) and two discharge rotors (10) in the housing (11), wherein the discharge rotors (10) respectively have at least two paddles (13) and are disposed in a discharge plane (17) for opposing rotary movement about two rotor axes (12) disposed at right angles to the discharge plane (17), and wherein the housing (11) has an inlet (16) in an upper side (15) for straw and partially encloses the paddles (13) parallel to the discharge plane (17) and in a direction of travel (4) of the combine harvester and is open in the opposite direction to the direction of travel (4) for discharging the straw in the discharge plane (17), **characterized in that**
at least in sections, an upper gap (24) between the paddles (13) and the upper side (15) is at least double the size of a lower gap (26) between the paddles (13) and a lower side (25) of the housing (11), wherein the upper gap (24) has a constant width (27) in a region (30) facing the rotor axis (12).

2. The combine harvester according to the preceding claim, **characterized in that** the upper gap (24) widens in a V-shape in the radial direction.

3. The combine harvester according to one of the preceding claims, **characterized in that** the paddles (13) are fabricated from cast steel.

4. The combine harvester according to one of the preceding claims, **characterized by** a chopper (2) above the radial distributor (3) for chopping the straw and an outlet (9) letting the chopped straw out of the chopper (2) into the inlet (16) of the discharge rotors (10).

5. The combine harvester according to one of the preceding claims, **characterized in that** the upper gap (24), the lower gap (26) and a lateral gap (28) between the paddles (13) and a guide surface (14) together comprise 15 to 30% of a cross section of the housing (11).

6. The combine harvester according to one of the preceding claims, **characterized in that** the housing (11) has a cylindrical shape.

7. The combine harvester according to one of the preceding claims, **characterized in that** on an end face facing away from the rotor axis (12), the paddles (13) have indentations (21) which extend parallel to the discharge plane (17).

8. The combine harvester according to the preceding claim, **characterized in that** the indentations (21) are V-shaped in configuration.

## Revendications

1. Moissonneuse-batteuse dotée d'un éparpilleur radial (3) qui présente un carter (11) et, dans le carter (11), deux rotors de projection (10), lesdits rotors de projection (10) présentant chacun au moins deux palettes (13) et étant disposés dans un plan d'éjection (17), avec possibilité de rotation dans des sens opposés autour de deux axes de rotor (12) perpendiculaires au plan d'éjection (17), et le carter (11) présentant une entrée (16) pour la paille, dans une face supérieure (15), et entourant les palettes (13) en partie, parallèlement au plan d'éjection (17) et dans un sens de déplacement (4) de la moissonneuse-batteuse, et étant ouvert dans le sens opposé au sens de déplacement (4), en vue de l'éjection de la paille dans le plan d'éjection (17),
**caractérisée en ce que**
un interstice supérieur (24) entre les palettes (13) et la face supérieure (15) est au moins par portions au moins deux fois plus grand qu'un interstice inférieur (26) entre les palettes (13) et une face inférieure (25) du carter (11), l'interstice supérieur (24) présentant une largeur (27) constante dans une zone (30) tournée vers l'axe de rotor (12).

2. Moissonneuse-batteuse selon la revendication précédente, **caractérisée en ce que** l'interstice supérieur (24) s'élargit en forme de coin dans la direction radiale.

3. Moissonneuse-batteuse selon une des revendications précédentes, **caractérisée en ce que** les palettes (13) sont réalisées en acier moulé.

4. Moissonneuse-batteuse selon une des revendications précédentes, **caractérisée en ce qu'**elle comprend un broyeur (2), destiné à hacher la paille au-dessus de l'éparpilleur radial (3), et une sortie (9) par laquelle la paille hachée quitte le broyeur (2) pour passer dans l'entrée (16) des rotors de projection (10).

5. Moissonneuse-batteuse selon une des revendications précédentes, **caractérisée en ce que** l'interstice supérieur (24), l'interstice inférieur (26) et un interstice latéral (28) entre les palettes (13) et une surface de guidage (14) englobent ensemble de 15 à 30 % d'une section transversale du carter (11).

6. Moissonneuse-batteuse selon une des revendications précédentes, **caractérisée en ce que** le carter (11) présente une forme cylindrique.

7. Moissonneuse-batteuse selon une des revendications précédentes, **caractérisée en ce que** les palettes (13) présentent, sur une face frontale éloignée de l'axe de rotor (12), des saillies (21) qui s'étendent parallèlement au plan d'éjection (17).

8. Moissonneuse-batteuse selon la revendication précédente, **caractérisée en ce que** les saillies (21) sont réalisées en forme de coins.
